(19) **Europäisches Patentamt**

**European Patent Office**

**Office européen des brevets**

(11) Veröffentlichungsnummer: **0 208 318 B1**

(12) **EUROPÄISCHE PATENTSCHRIFT**

(45) Veröffentlichungstag der Patentschrift: **23.10.91**

(51) Int. Cl.5: **G05D 23/24**, B60R 1/06, B62D 1/04

(21) Anmeldenummer: **86109441.5**

(22) Anmeldetag: **10.07.86**

(54) **Temperaturabhängige elektrische Schaltungsanordnung.**

(30) Priorität: **12.07.85 DE 3524957**

(43) Veröffentlichungstag der Anmeldung:
**14.01.87 Patentblatt 87/03**

(45) Bekanntmachung des Hinweises auf die
Patenterteilung:
**23.10.91 Patentblatt 91/43**

(84) Benannte Vertragsstaaten:
**DE FR GB IT SE**

(56) Entgegenhaltungen:
**DE-A- 3 438 266**
**DE-C- 2 927 954**
**US-A- 4 412 424**

**ELEKTOR, Band 8, Nr. 2, Februar 1982, Seiten
258-260, Beek, NL; "Dark room thermostat"**

(73) Patentinhaber: **Kabelwerke Reinshagen GmbH
Reinshagenstrasse 1
W-5600 Wuppertal 21(DE)**

(72) Erfinder: **Vogt, Friedrich, Dipl.-Ing.
Henselweg 14
W-5600 Wuppertal 1(DE)**

(74) Vertreter: **Priebisch, Rüdiger, Dipl.-Ing.,
Dipl.-Wirtsch.-Ing. (FH) et al
Kabelwerke Reinshagen GmbH Patentabteilung Reinshagenstrasse 1
W-5600 Wuppertal 21(DE)**

## Beschreibung

Die Erfindung betrifft eine temperaturabhängige elektrische Schaltungsanordnung, wie sie aus der Zeitschrift ELEKTOR, Band 8, Nr. 2, Februar 1982, Seiten 258 - 260, BeeK, NL; "Dark room thermostat -safety with low voltage", bekannt ist. Dort werden bei einer Thermostatschaltung schon ein NTC-Widerstand, Komparatoren und ein Flip-Flop-Schalter verwendet.

Eine ähnliche Schaltungsanordnung ist aus der DE-A1-34 38 266 vorbekannt. Diese Schaltung ist sehr aufwendig, weil sie eine Relaisschaltung verwendet.

Aus der US-A-44 12 424 ist eine Klima-Schaltanordnung bekannt, die ein Beschlagen der Fahrzeugscheiben verhindern soll. Hier werden jedoch zwei Temperaturen, nämlich Innen- und Außentemperatur, miteinander verglichen und ein herkömmlicher Schaltungsaufbau verwendet.

Aus der DE-C2-29 27 954 ist die Verwendung einer PTC-gesteuerten Regelung einer Spiegelheizung bei einem Kraftfahrzeug bekannt.

Der Erfindung liegt nun die Aufgabe zugrunde, eine Schaltungsanordnung der eingangs genannten Art zu schaffen, die kompakt und billig ist und eine, insbesondere an die Bedingungen im Kraftfahrzeug, leicht anpaßbare Schal tung bildet.

Die Erfindung löst diese Aufgabe durch die in den Ansprüchen gekennzeichneten Mittel.

Durch die Verwendung eines serienmäßigen IC's, z.B. des IC's vom Typ 555, ist die Schaltungsanordnung sehr raumsparend, leicht und billig herstellbar und für die Anwendung im Kraftfahrzeug sehr gut geeignet, da sehr robust und variabel. Die Erfindung findet Anwendung bei der Überwachung oder Regelung einer beleibigen elektrischen Last, z.B. eines Motors oder einer Heizung. Insbesondere hat sich die erfindungsgemäße Schaltungsanordnung bei der Regelung von elektrischen Heizungen in Kraftfahrzeugen bewährt, z.B. bei elektrisch beheizsbaren Außenspiegeln und Lenkrädern.

In der Zeichnung sind zwei Ausführungsbeispiele der Erfindung dargestellt, die im nachfolgenden näher beschrieben werden.

Figur 1 zeigt eine Schaltungsanordnung bei einem einfachen Anwendungsfall zur Überwachung einer elektrischen Last.

Figur 2 zeigt eine Schaltungsanordnung bei einem Anwendungsfall in einem Kraftfahrzeug, und zwar zur Regelung einer elektrischen Heizung.

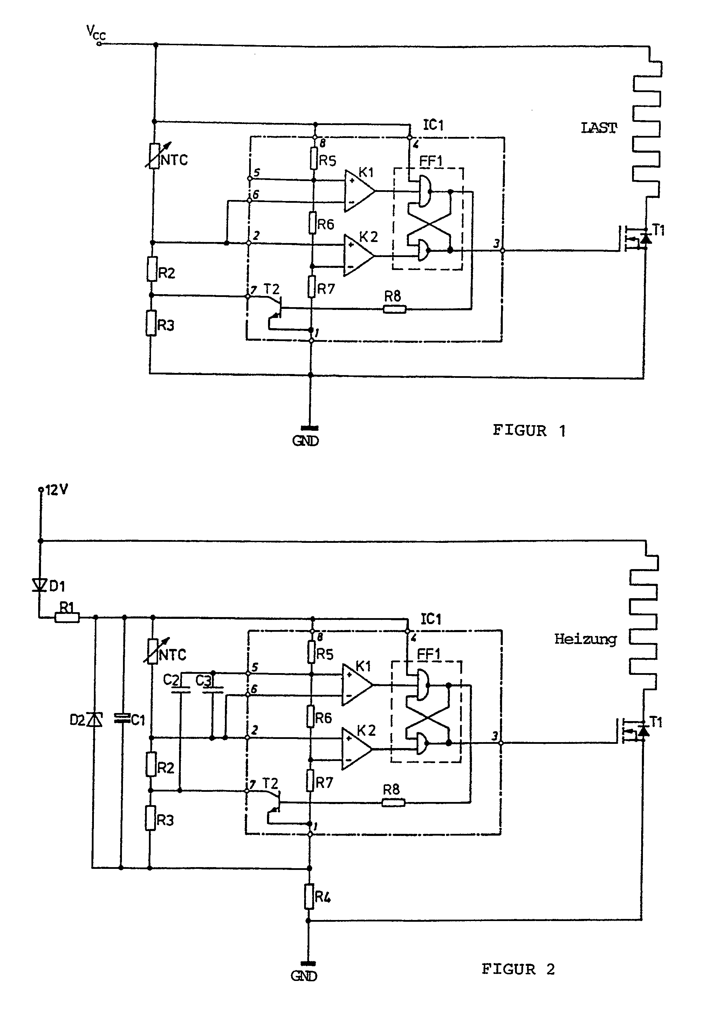

Gemäß Figur 1 liegt eine Integrierte Schaltung IC1 mit Pin 4 und Pin 8 an einer positiven Spannung und mit Pin 1 an Masse. Ein Sensor in Form eines NTC-Widerstandes und die Widerstände R2 und R3 liegen in Reihe, wobei der NTC-Widerstand mit der positiven Spannung verbunden ist und der Widerstand R3 mit Masse. Der NTC-Widerstand und der Widerstand R2 sind außerdem mit ihrem Verbindungspunkt an die gebrückten Eingänge Pin 2 und Pin 6 der Schaltung IC1 angeschlossen, und die Widerstände R2 und R3 liegen mit ihrem Verknüpfungspunkt an Pin 7 des IC1 an. Der Ausgang Pin 3 des IC1 geht auf das Gate des N-Kanal MOSFET T1. Der MOSFET T1 liegt mit seinem Source-Anschluß auf Masse, und der Drain-Anschluß ist mit einer elektrischen Last verbunden, wobei die Last in einer positiven Spannung angeschlossen ist. Die Last kann ein Motor, eine Heizung oder dergleichen sein.

Funktion:

Die Schaltung in Figur 1 zeigt einen sehr einfachen und platzsparenden Zweipunktregler mit einem Timer-IC 555 (=IC1). Für die Ist-Wert-Erfassung (z.B. Temperaturerfassung) wird ein Sensor in Form eines NTC-Widerstandes verwendet, der seinen Widerstandswert in Abhängigkeit von der Regelgröße (Temperatur) ändert. Der Widerstandswert des NTC-Widerstandes wird in einer Brückenschaltung ausgewertet, wobei ein Brückenzweig durch den NTC-Widerstand und die Widerstände Rs und R3 gebildet wird und der andere Brückenzweig durch die Widerstände R5 ,R6 und R7, die auf dem IC1 integriert sind. Da der auf dem IC1 integrierte Brückenzweig aus drei Widerständen R5 bis R7 besteht, deren Verknüpfungspunkt jeweils an einem Komparator liegen, kann durch die äußere Beschaltung von IC1 sehr einfach eine Brücke mit zwei verschiedenen Brückendialgonalen erzeugt und ausgewertet werden. Zur Auswertung wird jeweils der Nullabgleich der beiden Brückendiagonalen herangezogen, weil die Abgleichbedingung einer Brücke unabhängig von der Versorgungsspannung ist.

Die auf dem IC1 integrierten Widerstände R5 bis R7 sind gleich, d.h. $R5 = R6 = R7 = R$. Der Verknüpfungspunkt von R6 und R7 geht auf den invertierenden Eingang des Komparators K2 und legt damit die Umschaltschwelle von K2 auf 1/3 der Versorgungsspannung fest. Der nicht-invertierende Eingang des Kompararors K1 liegt auf dem Verknüpfungspunkt von R5 und R6,und dit liegt die Umschaltschwelle von K1 bei 2/3 der Versorgungsspannung. Geht man nun davon aus, daß die Spannung am Pin 2 bzw. Pin 6 von IC1 beim Einschalten der Versorgungsspannung kleiner als 1/3 der Versorgungsspannung ist, liegt der Ausgang des Komparators K2 und damit der S-Eingang des RS-Flip-Flops FF1 auf LOW und der Ausgang des Komparators K1 und damit der R-Eingang des RS-Flip-Flops FF1 auf HIGH. Am Q-Ausgang von FF1 steht also ein HIGH-Signal zur Verfügung, um den MOSFET T1 durchzusteuern.

Wird nun z.B. ein KFZ-Spiegel elektrisch aufgeheizt, wobei der NTC-Widerstand thermisch mit dem Spiegel gekoppelt ist, verringert sich durch den Temperaturanstieg der Widerstandswert des NTC-Widerstandes, und die Spannung am Pin 2 bzw. Pin 6 von IC1 steigt an. Ist die Spannung am Pin 6 auf 1/3 der Versorgungsspannung gestiegen, schaltet der Komparator K2 seinen Ausgang HIGH, der Ausgangspegel des RS-Flip-Flops FF1 bleibt jedoch unbeeinflußt, da nun beide Eingänge von FF1 HIGH sind.

Erreicht der NTC-Widerstand die Bedingung NTC = 1/2(R2 + R3), ist die Spannung an Pin 2 von IC1 auf 2/3 der Versorgungsspannung angestiegen.Daher kippt der Ausgang des Komparators K1 auf LOW und der Ausgang des Komparators K2 bleibt HIGH. Der S-Eingang des RS-Flip-Flops FF1 bleibt also auf HIGH, und der R-Eingang von FF1 geht auf LOW, d.h. der Q-Ausgang des RS-Flip-Flops FF1 schaltet auf LOW und sperrt den Transistor T1, um die Last auszuschalten. Das LOW-Signal am Q-Ausgang von FF1 hat ein HIGH-Signal am Q-Ausgang von FF1 zur Folge; der Transistor T2 wird daher durchgesteuert und überbrückt den Widerstand R3, wenn die Heizung ausschalt. Durch das Überbrücken des Widerstandes R3 sinkt die Spannung am Pin 6 von IC1 und der Komparator K1 schaltet am Ausgang wider auf HIGH. Das RS-Flip-Flop FF1 ändert jedoch nicht sein Ausgangssignal, da nun beide Eingänge von FF1 auf HIGH liegen.

Nimmt man an, daß nach dem Ausschalten der Last die Temperatur wieder fällt, steigt der Widerstandswert des NTC-Widerstandes, was ein weiteres Sinken der Spannung am Pin 1 bzw. Pin 6 zur Folge hat. Erreicht der NTC-Widerstandswert die Bedingung NTC = 2R2, ist die Spannung am Pin 2 bzw. Pin 6 von IC1 auf 1/3 der Versorgungsspannung gesunken , und der Komparator K2 schaltet seinen Ausgang auf LOW , während der Komparator K1 mit seinem Ausgang auf HIGH bleibt. Der Ausgangspegel am RS-Flip-Flop FF1 geht dadurch seinerseits wieder auf HIGH und steuert den Transistor T1 durch, d.h. die Last wird eingeschaltet.

Das oben beschriebene Ein- und Ausschalten der Last wiederholt sich, solange der NTC-Widerstand durch den Einfluß der Umgebungstemperatur die Bedingung NTC = 2R2 erreichen kann; ist die Umgebungstemperatur so hoch, daß die Bedingung nicht erreicht wird, bleibt die Last ausgeschaltet.

Wie aus der Funktionsbeschreibung zu entnehmen ist, werden die beiden Schaltpunkte des Zweipunktreglers durch die Widerstände R2 , R3 und den Widerstand des Sensors (NTC-Widerstand) festgelegt.
Es gilt:
    NTC = 2R2 :
    EINSCHALTPUNKT
    NTC = 1/2 (R2 + R3):
    AUSSCHALTPUNKT
    Die Schaltpunkte können außerdem über den Pin 5 von IC1 beeinflußt werden. Ohne eine von außen eingeprägte Spannung liegt der Pin 5 von IC1 und damit der nichtinvertierende Eingang des Komparartors K1 auf 2/3 der Versorgungs-Spannung. Wird die Spannung an Pin 5 von außen verändert, legt nun die äußere Spannung die Umschaltschwelle der Komparatoren K1 und K2 fest, wobei die Umschaltschwelle des Komparators K2 bei der Hälfte der an Pin 5 von IC1 angeschlossenen Spannung liegt. Werden die Schaltschwellen über den Pin 5 von IC1 beeinflußt, ändern sich die oben angegebenen Bedingungen für den Einschaltpunkt bzw. den Ausschaltpunkt.

Figur 2 zeigt eine Erweiterung der bereits in Fig. 1 vorgestellten Schaltung. Die Schaltung gemäß Figur 2 ist auf die Bedingungen in einem Kraftfahrzeug abgestimmt, wobei die Bauelemente D1, D2, R1, R4, C1, C2 und C3 hinzugekommen sind. Es ist die gleiche integrierte Schaltung IC1 verwendet.

Gemäß Figur 1 liegt die Diode D1 mit der Anode an einer positiven Spannung und mit der Kathode an dem Widerstand R1. Der Widerstand R1 ist auf der anderen Seite mit der Kathode der Zenerdiode D2 verbunden, und die Anode von D2 liegt über den Widerstand R4 an Masse. Parallel zur Zenerdiode D2 ist noch der Kondensator C1 geschaltet. Der Kondensator C2 liegt zwischen Pin 5 und Pin 7 von IC1 und der Kondensator C3 zwischen Pin 5 und Pin 2 von IC1. Der MOSFET T1 liegt mit seinem Source-Anschluß auf Masse, und der Drain-Anschluß ist mit der Heizung verbunden, wobei die Heizung an eine positive Spannung angeschlossen ist.

Die weiteren Bauelemente in Figur 2 sind gemäß der Beschreibung zu Figur 1 angeordnet, wobei der Verknüpfungspunkt von R 1 und D2 bzw. C1 der positiven Spannung und der Verbindungspunkt von D2 bzw. C1 und R4 der Masse in Figur 1 entspricht.

Funktion:
Die Schaltung in Figur 2 benötigt im Gegensatz zu der Schaltung in Figur 1 keine konstante Gleichspannung, sondern kann z.B. an den bordnetzspezifischen Spannungsschwankungen eines Kraftfahrzeugs betrieben werden, arbeitet aber ansonsten wie die anhand von Figur 1 beschriebene Schaltung.
Der Widerstand R1 und die Zenerdiode D2 sorgen bei Spannungserhöhungen für eine annähernd konstante Spannungsversorgung der Elektronik. Der Kondensator C1 hält die Spannungsversorgung der Elektronik bei Spannungseinbrüchen aufrecht, und die Diode D1 schützt die Elektronik vor negativen Spannungen und hält die Kondensatorladung bei negativen Spannungsspitzen. Der Widerstand R4 schützt den MOSFET T1 vor Überspannungen, denn der Spannungsabfall über den Widerstand R4 steigt bei positiven Spannungsspitzen an und hebt damit das GND-Potential der Elektronik, und die Spannung am Pin 3 von IC1 steigt gegenüber Masse, auch wenn am Pin 3 von IC1 ein LOW-Signal ist. Durch die Spannungserhöhung am Pin 3 von IC1 wird der MOSFET T1 durchgesteuert, und es können daher keine unzulässig hohen Spannungen an T1 auftreten.

Die Kondensatoren C2 und C3 sorgen dafür, daß auch bei einer stark mit Störimpulsen behafteten Versorgungsspannung die Schaltpunkte des IC1 unbeeinflußt bleiben. Weiterhin wird durch die Kondensatoren C2 und C3 sichergestellt, daß beim Einschalten der Versorgungsspannung die Heizung nicht einschaltet, solange die Temperatur oberhalb der Einschaltschwelle liegt.

## Patentansprüche

1.  Temperaturabhängige elektrische Schaltungsanordnung mit
    - einer elektrischen Last,
    - einer aus zwei Zweigen gebildeten Brückenschaltung,
    - einem temperaturabhängigen Sensor (NTC),
    - einer zwei Komparatoren (K1,K2) enthaltenden Auswertelogik und
    - einem die elektrische Last direkt ansteuernden Leistungsschalter (T1), wobei der erste Zweig aus einer Reihenschaltung des temperaturabhängigen Sensors (NTC) als ersten Widerstand, eines zweiten Widerstandes (R2) und eines dritten Widerstandes (R3) und der zweite Zweig aus einer Reihenschaltung aus einem vierten Widerstand (R5), einem fünften Widerstand (R6) und einem sechsten Widerstand (R7) gebildet ist,
    
    wobei der erste Komparator (K1) mit seinem positiven Eingang (+) an den Verbindungspunkt zwischen dem vierten Widerstand (R5) und dem fünften Widerstand (R6) und mit seinem negativen Eingang (-) an den Verbindungspunkt zwischen dem temperaturabhängigen Sensor (NTC) und dem zweiten Widerstand (R2) angeschlossen ist, wobei der zweite Komparator (K2) mit seinem positiven Eingang (+) an den Verbindungspunkt zwischen dem temperaturabhängigen Sensor (NTC) und dem zweiten Widerstand (W2) und mit seinem negativen Eingang (-) an den Verbindungspunkt zwischen dem fünften Widerstand (R6) und dem sechsten Widerstand (R7) angeschlossen ist,
    
    wobei den beiden Komparatoren (K1,K2) ein Flip-Flop (FF1) nachgeschaltet ist, dessen einer Ausgang (3) den Leistungsschalter (T1) ansteuert und dessen anderer Ausgang mit der Basis eines Transistors (T2) verbunden ist, dessen Kollektor (7) mit dem Verbindungspunkt zwischen dem zweiten Widerstand (R2) und dem dritten Widerstand (R3) verbunden ist und dessen Emitter (1) zusammen mit dem anderen Ende des dritten Widerstandes (R3) einen gemeinsamen Punkt bilden, der mit dem Masseanschluß (GND) der positiven Speisespannung der Schaltungsanordnung verbunden ist, und wobei der zweite Zweig (R5, R6, R7) zusammen mit den Komparatoren (K1, K2), dem Flip-Flop (FF1) und dem Transistor (T2) schaltungstechnisch eine integrierte Schaltung (IC1) bildet.

2.  Schaltungsanordnung nach Anspruch 1, dadurch gekennzeichnet, daß dem ersten Komparator (K1) ein Kondensator (C3) parallelgeschaltet ist und ein Kondensator (C2) mit dem positiven Eingang (+) des Komparators (K1) und dem Verbindungspunkt zwischen dem zweiten Widerstand (R2) und dem dritten Widerstand (R3) verbunden ist (Fig. 2).

3.  Schaltungsanordnung nach Anspruch 1 oder 2, dadurch gekennzeichnet, daß der Emitter (1) des Transistors (T2) über einen Widerstand (R4) an dem Masseanschluß (GND) liegt (Fig. 2).

## Claims

1.  Temperature-dependent electrical circuit arrangement having
    - an electrical load,
    - a bridge circuit formed from two branches,
    - a temperature-dependent sensor (NTC),
    - an evaluation logic containing two comparators (K1, K2), and
    - a power switch (T1) directly controlling the electrical load,
    
    with the first branch being formed from a series arrangement of the temperature-dependent sensor (NTC) as the first resistor, a second resistor (R2) and a third resistor (R3), and the second branch being formed from a series arrangement comprising a fourth resistor (R5), a fifth resistor (R6) and a sixth resistor (R7), with the first comparator (K1) being joined by its positive input (+) to the connection point between the fourth resistor (R5) and the fifth resistor (R6) and by its negative input (-) to the connection point between the temperature-dependent sensor (NTC) and the second resistor (R2),
    
    with the second comparator (K2) being joined by its positive input (+) to the connection point between the temperature-dependent sensor (NTC) and the second resistor (W2) and by its negative input (-) to the connection point between the fifth resistor (R6) and the sixth resistor (R7),

with there being downstream of the two comparators (K1, K2) a flip-flop (FF1) whereof one output (3) controls the power switch (T1) and whereof the other output is connected to the base of a transistor (T2) whereof the collector (7) is connected to the connection point between the second resistor (R2) and the third resistor (R3) and whereof the emitter (1) forms together with the other end of the third resistor (R3) a common point which is connected to the ground connection (GND) of the positive supply voltage of the circuit arrangement,

and with the second branch (R5, R6, R7) forming together with the comparators (K1, K2), the flip-flop (FF1) and the transistor (T2) an integrated circuit (IC1) in accordance with circuit technology.

2. Circuit arrangement according to Claim 1, characterized in that a capacitor (C3) is connected in parallel with the first comparator (K1) and a capacitor (C2) is connected to the positive input (+) of the comparator (K1) and the connection point between the second resistor (R2) and the third resistor (R3) (Fig. 2).

3. Circuit arrangement according to Claim 1 or 2, characterized in that the emitter (1) of the transistor (T2) is joined via a resistor (R4) to a ground connection (GND) (Fig. 2).

## Revendications

1. Circuit électrique commandé par la température, comprenant
   - une charge électrique,
   - un circuit en pont constitué de deux branches,
   - un capteur sensible à la température (CTN),
   - une logique d'exploitation contenant deux comparateurs (K1, K2), et
   - un commutateur de charge (T1) commandant directement la charge électrique, la première branche étant formée par un circuit série constitué par le capteur sensible à la température (CTN) en tant que première résistance, une deuxième résistance (R2) et une troisième résistance (R3) et la seconde branche étant formée par un circuit série constitué par une quatrième résistance (R5), une cinquième résistance (R6) et une sixième résistance (R7),

   le premier comparateur (K1) étant raccordé par son entrée positive (+) au point de jonction entre la quatrième résistance (R5) et la cinquième résistance (R6) et par son entrée négative (-) au point de jonction entre le capteur sensible à la température (CTN) et la deuxième résistance (R2),

   le second comparateur (K2) étant raccordé par son entrée positive (+) au point de jonction entre le capteur sensible à la température (CTN) et la seconde résistance (R2) et par son entrée négative (-) au point de jonction entre la cinquième résistance (R6) et la sixième résistance (R7),

   les deux comparateur (K1, K2) étant suivis d'une bascule (FF1), dont une sortie (3) commande le commutateur de puissance (T1) et dont l'autre sortie est reliée à la base d'un transistor (T2) dont le collecteur (7) est relié au point de jonction entre la deuxième résistance (R2) et la troisième résistance (R3) et dont l'émetteur (1) forme avec l'autre extrémité de la troisième résistance (R3) un point commun qui est relié au point de masse de la tension d'alimentation positive du circuit, et la seconde branche (R5, R6, R7) formant avec les comparateurs (K1, K2), la bascule (FF1) et le transistor (T2) un circuit intégré (IC1) conforme à la technique des circuits.

2. Circuit selon la revendication 1, caractérisé en ce qu'un condensateur (C3) est monté en parallèle sur le premier comparateur (K1) et un condensateur (C2) est relié à l'entrée positive (+) du comparateur (K1) et au point de jonction entre la deuxième résistance (R2) et la troisième résistance (R3) (figure 2).

3. Circuit selon la revendication 1 ou 2, caractérisé en ce que l'émetteur (1) du transistor (T2) est relié au point de masse par l'intermédiaire d'une résistance (R4) (figure 2).

FIGUR 1

FIGUR 2